# FASCICULE DE BREVET EUROPEEN

(11) **EP 1 089 010 B1**
(45) Date de publication et mention de la délivrance du brevet: **13.10.2004**
(21) Numéro de dépôt: 00402266.1
(22) Date de dépôt: 10.08.2000
(51) Int. Cl.: F16F 13/10

(54) **Ensemble armature-clapet de support hydroélastique**
Kombiniertes Trennwand-Ventil- Element für hydroelastisches Lager
Combined partition-valve unit for hydroelastic support

(30) Priorité: 29.09.1999 FR 9912158
(43) Date de publication de la demande: 04.04.2001
(73) Titulaire: Peugeot Citroen Automobiles SA, 92200 Neuilly sur Seine (FR)
(72) Inventeur: Rot, Claude, 35000 Rennes (FR); Gramond, Bertrand, 35650 Le Rheu (FR)
(74) Mandataire: Lanceplaine, Jean-Claude

(56) Documents cités:
- EP-A- 0 042 910
- DE-A- 4 233 240
- DE-U- 29 813 242
- US-A- 4 641 817
- US-A- 4 765 601

## Description

La présente invention concerne un ensemble armature-clapet de support hydroélastique destiné à être interposé entre un élément à suspendre et un élément à isoler l'un par rapport à l'autre, notamment pour la suspension d'un groupe motopropulseur dans une caisse d'un véhicule automobile, et d'une manière générale destiné à la suspension de tout ensemble vibrant.

L'invention a également pour objet un support hydroélastique équipé d'un tel clapet.

Les supports hydroélastiques ont pour fonction de filtrer les vibrations dues au fonctionnement du groupe motopropulseur et d'amortir les oscillations provenant de la caisse du véhicule automobile lors de son utilisation.

Généralement, les supports hydroélastiques comportent un corps formé par une masse en matériau élastomère reliant une armature supérieure et une armature inférieure fixées respectivement sur les deux éléments et une chambre de travail délimitée au moins en partie par la masse en matériau élastomère.

De plus, ce type de supports comporte une chambre d'expansion délimitée au moins en partie par une membrane inférieure souple.

Cette chambre d'expansion est reliée à la chambre de travail par un canal de communication et ces chambres sont remplies de liquide, comme par exemple de l'antigel.

La circulation du liquide d'une chambre à l'autre lorsque le support est soumis à des sollicitations alternées permet d'obtenir un amortissement à une fréquence donnée.

Pour des fréquences supérieures à cette fréquence déterminée, le liquide ne circule plus dans le canal de communication entre les deux chambres ce qui provoque une augmentation de la raideur, entraînant à son tour une dégradation du filtrage.

Afin d'éviter cette dégradation, les supports hydroélastiques comportent un clapet, également appelé clapet de découplage hydraulique, qui est interposé entre les deux chambres et qui, pour de petites déformations, permet de compenser l'absence de circulation du liquide dans le canal de communication pour ainsi éviter l'augmentation de la raideur liée à l'incompressibilité de ce liquide.

Par contre, le clapet est suffisamment rigide pour ne pas contrarier la circulation du liquide à travers le canal de communication pour des grandes amplitudes d'excitation et cette rigidité est obtenue par des butées limitant la déformation du clapet.

Le compromis entre la souplesse pour de petits déplacements et la raideur pour de grands déplacements est obtenu grâce à un ensemble armature-clapet, le clapet étant monté dans un logement ménagé dans l'armature qui elle-même est le plus souvent composée de deux parties indépendantes et assemblées.

Dans tous les cas, le jeu entre le clapet et l'armature permet d'absorber le débattement dudit clapet pour de faibles amplitudes et de limiter ce débattement pour des faibles fréquences et de grandes amplitudes afin de permettre au canal de communication entre les deux chambres de jouer son rôle.

Le clapet et l'armature sont donc formés par plusieurs pièces indépendantes qui nécessitent, avant leur montage dans le support hydroélastique plusieurs opérations d'assemblage augmentant ainsi le coût d'un tel support hydroélastique.

On connaît également dans le document US-A-4 641 817 un ensemble armature-clapet de support hydroélastique destiné à être interposé entre un élément à suspendre et un élément à isoler l'un par rapport à l'autre qui comprend notamment des chambres de travail et d'expansion séparées l'une de l'autre par un ensemble armature-clapet monté sur un support relié à l'armature inférieure. L'ensemble armature-clapet est formé en une seule pièce qui comprend une partie centrale réalisée en une matière rigide et une partie annulaire réalisée en une matière souple reliant élastiquement ladite partie centrale à l'armature réalisée en une matière rigide et comportant, à sa périphérie, un canal de communication entre les deux chambres.

L'invention a pour but de proposer un ensemble armature-clapet de support hydroélastique de conception simplifiée et qui permet de compenser efficacement l'absence de circulation du liquide dans le canal de communication entre la chambre de travail et la chambre d'expansion et d'éviter l'augmentation de la raideur et de la dégradation du filtrage du support hydroélastique.

L'invention a donc pour objet un ensemble armature-clapet de support hydroélastique destiné à être interposé entre un élément à suspendre et un élément à isoler l'un par rapport à l'autre, notamment pour la suspension d'un groupe motopropulseur dans une caisse d'un véhicule automobile, du type comprenant un corps formé par une masse en matériau élastomère reliant une armature supérieure et une armature inférieure, une chambre de travail délimitée au moins en partie par la masse en matériau élastomère et une chambre d'expansion délimitée au moins en partie par une membrane souple, ces deux chambres étant remplies de liquide et reliées entre elles par un canal de communication, et du type dans lequel les chambres de travail et d'expansion sont séparées l'une de l'autre par l'ensemble armature-clapet monté sur un support relié à l'armature inférieure, l'ensemble armature-clapet étant formé en une seule pièce et le clapet comprenant une partie centrale en forme de disque réalisée en une matière rigide et une partie annulaire en forme de couronne concentrique audit disque réalisée en une matière souple reliant élastiquement ladite partie centrale à l'armature réalisée en une matière rigide et comportant, à sa périphérie, le canal de communication entre les deux chambres, l'armature ayant la forme d'un anneau comportant, d'une part, une portion externe formée de deux branches parallèles et reliées entre elles par une branche centrale pour former le canal de communication et, d'autre part, une portion interne plane s'étendant perpendiculairement à la branche centrale vers le centre de l'anneau et destinée à être reliée à la partie annulaire du clapet et la partie centrale du clapet comportant des organes de limitation en amplitude à basse fréquence du clapet, caractérisé en ce que les organes de limitation en amplitude sont formés par deux pattes supérieures diamétralement opposées, solidaires de la partie centrale du clapet et s'étendant radialement au-dessus de la partie annulaire et par deux pattes inférieures diamétralement opposées, solidaires de la partie centrale du clapet et s'étendant radialement au-dessous de ladite partie annulaire, lesdites pattes supérieures et inférieures étant décalées de 90° les unes par rapport aux autres de manière à ce que la partie annulaire soit interposée entre ladite portion interne de l'armature et lesdites pattes supérieures pour limiter le déplacement axial de la partie centrale par rapport à l'armature dans une direction et en même temps la partie annulaire soit interposée entre ladite portion interne de l'armature et lesdites pattes inférieures pour limiter le déplacement axial de la partie centrale par rapport à l'armature dans une direction opposée.

Selon une autre caractéristique de l'invention, la partie annulaire du clapet est reliée à la partie centrale dudit clapet et à la portion interne plane de l'armature par collage, par soudure ou par une liaison chimique.

L'invention a également pour objet un support hydroélastique destiné à être interposé entre un élément à suspendre et un élément à isoler l'un par rapport à l'autre, notamment pour la suspension d'un groupe motopropulseur dans une caisse d'un véhicule automobile, caractérisé en ce qu'il comprend un ensemble armature-clapet tel que mentionné ci-dessus.

Les caractéristiques et avantages de l'invention apparaîtront au cours de la description qui va suivre, donnée à tire d'exemple et faite en référence aux dessins annexés, sur lesquels :
- la Fig. 1 est une vue en coupe axiale d'un support hydroélastique muni d'un ensemble armature-clapet conforme à l'invention,
- la Fig. 2 est une vue schématique en perspective de l'ensemble armature-clapet conforme à l'invention,
- la Fig. 3 est une vue schématique en perspective de la partie centrale du clapet,
- la Fig. 4 est une vue schématique en perspective de la partie annulaire du clapet,
- la Fig. 5 est une vue schématique en perspective de l'armature de l'ensemble armature-clapet conforme à l'invention,
- la Fig. 6 est une vue schématique en coupe transversale selon la ligne 6-6 de la Fig. 2,
- la Fig. 7 est une vue schématique en coupe transversale selon la ligne 7-7 de la Fig. 2.

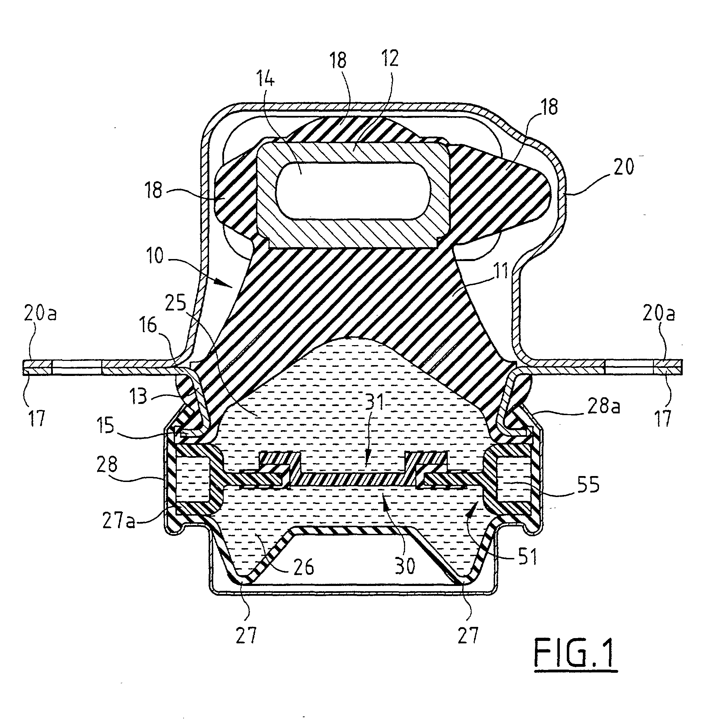

Le support hydroélastique représenté à la Fig. 1 est adapté pour être interposé entre un élément à suspendre et un élément à isoler l'un par rapport à l'autre et plus particulièrement pour être interposé entre un groupe moto-propulseur et le reste de la structure ou châssis de ce véhicule automobile.

Le support hydroélastique comprend un corps 10 formé par une masse en matériau élastomère 11 qui relie, d'une part, une armature supérieure 12 et, d'autre part, une armature inférieure 13.

L'armature supérieure 12 est formée, dans l'exemple de réalisation représenté à la Fig. 1, par un organe tubulaire comportant un perçage axial 14 pour le passage d'un organe de liaison, non représenté, avec l'élément à supporter, comme par exemple le groupe motopropulseur d'un véhicule automobile.

L'armature inférieure 13 comporte un rebord inférieur 15 replié vers l'extérieur et un rebord supérieur 16 muni de pattes de fixation 17 sur l'élément à isoler, c'est à dire la caisse du véhicule automobile.

Le corps 10 est réalisé par surmoulage et adhérisation de l'élastomère sur les armatures 12 et 13.

Le support hydroélastique comporte également un boîtier 20 qui coiffe le corps 10 et qui est fixé sur les pattes 17 de l'armature inférieure 13 au moyen de pattes 20a.

Ce boîtier 20 comporte deux ouvertures opposées pour le passage de l'organe de liaison entre l'armature supérieure 12 et le groupe motopropulseur du véhicule automobile.

Par ailleurs, la masse 11 en matériau élastomère du corps 10 comporte des organes de butée 18 coopérant avec les parois du boîtier 20 pour assurer la reprise des efforts dans toutes les directions de sollicitation du support, c'est à dire pour assurer le filtrage du hachis et du bourdonnement, limiter les débattements en attaque et en détente et reprendre les efforts en accélération et en freinage.

Le support hydroélastique comporte aussi une chambre de travail 25 délimitée en partie haute dans la masse en matériau élastomère 11 et une chambre d'expansion 26 disposée au-dessous de ladite chambre de travail 25 et délimitée en partie basse par une membrane souple 27.

Les chambres de travail 25 et l'expansion 26 sont délimitées, respectivement en partie basse pour ladite chambre de travail 25 et en partie haute pour ladite chambre d'expansion 26, par un ensemble armature-clapet désigné par la référence générale 30.

La membrane souple 27 comporte un rebord périphérique 27a qui est adhérisé sur un support 28 pour l'ensemble armature-clapet 30. Ce support est muni à sa partie supérieure d'un rebord de sertissage 28a sur le rebord 15 de l'armature inférieure 13 du corps 10.

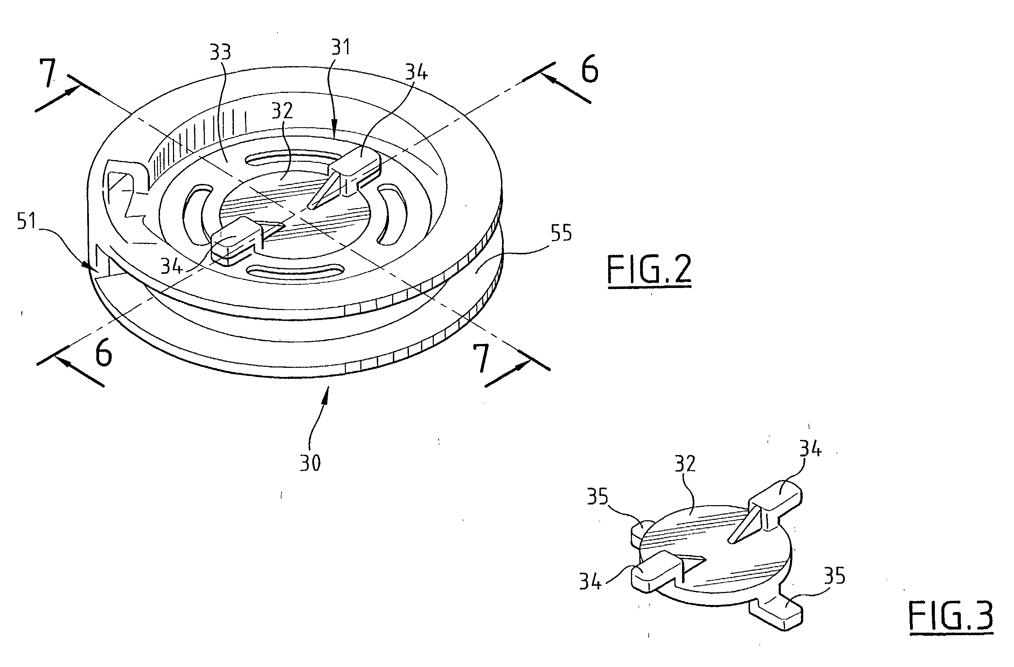

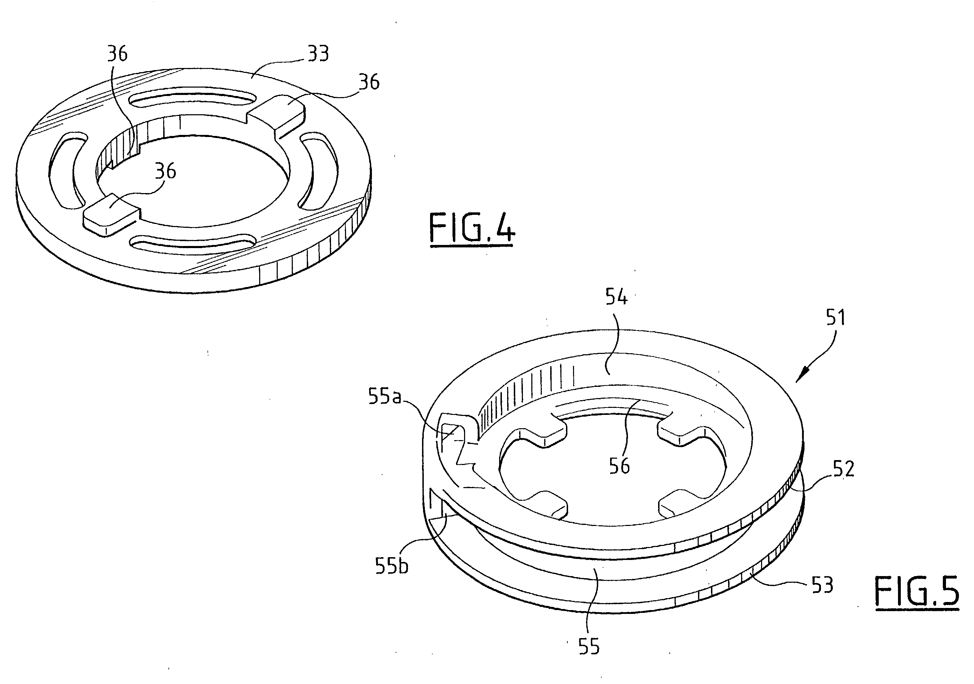

En se reportant maintenant aux Figs. 2 à 5, on va décrire l'ensemble armature-clapet 30.

Cet ensemble est formé par une seule pièce comprenant un clapet désigné par la référence générale 31 et une armature désignée par la référence générale 51.

Le clapet 31 se compose, d'une part, d'une partie centrale 32 ayant la forme d'un disque et réalisée en une matière rigide et, d'autre part, une partie annulaire 33 ayant la forme d'une couronne concentrique à ladite partie centrale 32 et réalisée en une matière souple.

La partie annulaire 33 relie élastiquement la partie centrale 32 à l'armature 51.

La partie centrale 32 du clapet 31 comporte des organes de limitation en amplitude à basse fréquence dudit clapet 31.

Ainsi que représenté à la Fig. 3, les organes de limitation en amplitude sont formés par deux pattes supérieures 34 opposées, solidaires de la partie centrale 32 du clapet 31 et s'étendant radialement au-dessus de la partie annulaire 33 et par deux pattes inférieures 35 opposées, solidaires de ladite partie centrale 32 du clapet 31 et s'étendant radialement au-dessous de ladite partie annulaire 33.

Les pattes 34 et 35 sont intercalées et décalées de 90° les unes par rapport aux autres.

La partie annulaire 33 en matériau souple comporte, sur sa face supérieure et sur sa face inférieure au droit de chaque patte 34 et 35, une surépaisseur 36.

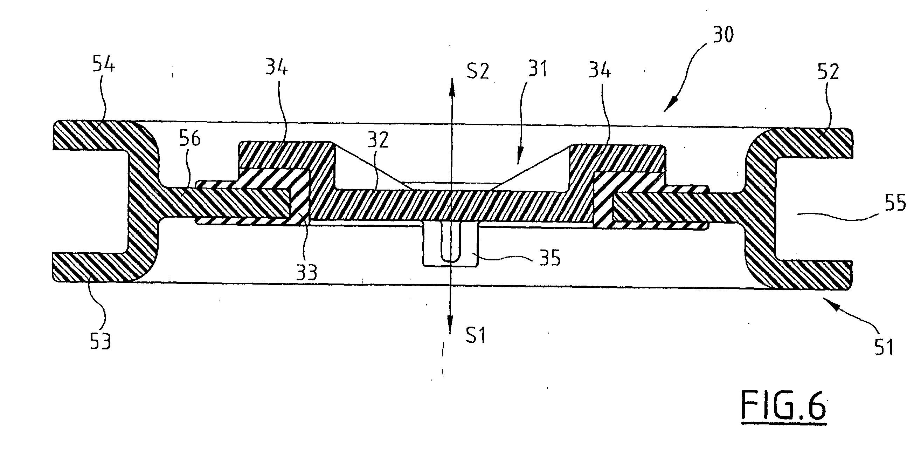

L'armature 51 représentée notamment sur les Figs. 5 à 7 a la forme générale d'un anneau comportant une portion externe formée de deux branches parallèles, respectivement 52 et 53, reliées entre elles par une branche centrale 54.

Les branches 52, 53 et 54 délimitent, avec la paroi interne du support 28, un canal de communication 55 entre la chambre de travail 25 et la chambre d'expansion 26 pour permettre la circulation du fluide entre ces chambres.

A cet effet, le canal de communication 55 comporte une ouverture 55a qui communique avec la chambre de travail 25 et une ouverture 55b qui communique avec la chambre d'expansion 26, les deux ouvertures 55a et 55b étant séparées l'une de l'autre d'une distance correspondant sensiblement à la longueur du canal de communication 55.

L'armature 51 comporte également une portion interne 56 plane s'étendant perpendiculairement à la branche centrale 54 vers le centre de l'anneau et destinée à être reliée à la partie annulaire 33 en matériau souple du clapet 31.

La partie annulaire 33 en matériau souple assure à la fois la liaison entre la partie centrale 32 du clapet 31 et l'armature 51 et l'étanchéité entre la chambre de travail 25 et la chambre d'expansion 26.

Cette partie annulaire 33 adhère en tout point à la partie centrale 32 et à la portion interne 56 de l'armature 51 par exemple par collage, par liaison chimique ou par soudure.

En fonctionnement, le clapet 31 est soumis à un régime vibratoire qui le fait osciller de part et d'autre de sa position d'équilibre.

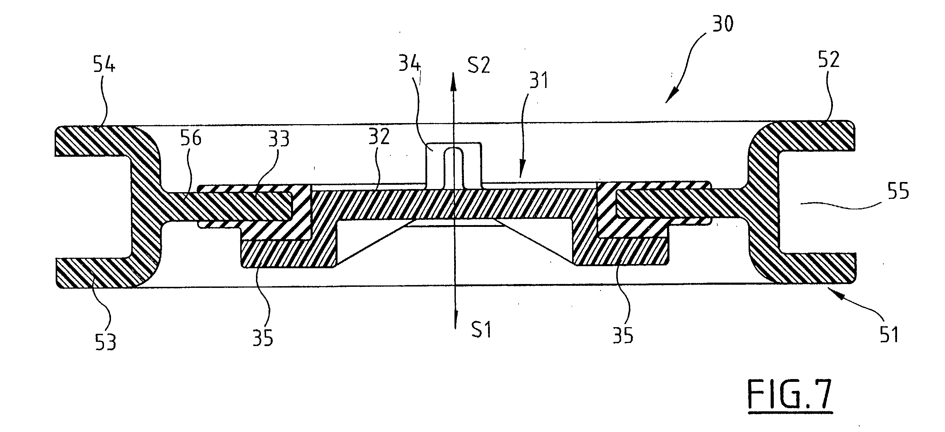

Le clapet 31 est sollicité par les mouvements du fluide dans la chambre de travail 25 et la chambre d'expansion 26 ce qui provoque un déplacement alternatif de ce clapet selon son axe, soit dans le sens S1, soit dans le sens S2, comme représenté sur les Figs. 6 et 7.

Lorsque le clapet 31 se déplace dans le sens S1, la partie annulaire 33 souple est sollicitée en flexion sur la périphérie du clapet 31 et sur le diamètre intérieur de l'armature 51.

Au niveau des pattes 34 et 35, cette partie annulaire 33 souple est comprimée au-dessous des pattes 34 et mise en traction au niveau des pattes 35. Ce mouvement est limité par les caractéristiques de ladite partie annulaire 33 souple supposée incompressible et dont la raideur s'oppose au mouvement.

Le clapet 31 est bloqué quand la réaction de la partie annulaire 33 souple égale la pression exercée sur ce clapet ce qui correspond à la saturation de cette partie annulaire 33 souple.

Lorsque le clapet 31 se déplace dans le sens S2, la partie annulaire 33 souple travaille en flexion sur ses diamètres intérieur et extérieur et en compression sous les pattes 35 et en traction au niveau des pattes 34.

La limitation en déplacement est assurée par la rigidité de la partie annulaire 33 du clapet 31.

Selon les propriétés recherchées, l'épaisseur et la dureté du matériau composant la partie annulaire 33 du clapet 31 peuvent être modifiées ainsi que les surépaisseurs 36 au-dessous des pattes 34 et 35.

A faible fréquence et grande amplitude, les débattements du clapet 31 sont limités par la saturation de la partie annulaire 33 en matériau souple au niveau des pattes 34 et 35.

A haute fréquence et faible amplitude, la souplesse de cette partie annulaire 33 permet au clapet 31 d'accepter les petites déformations qui en résultent et de compenser l'absence de mouvement du fluide dans le canal de communication 55 entre la chambre de travail 25 et la chambre d'expansion 26.

Les différents éléments composant l'ensemble armature-clapet peuvent être réalisés dans différents matériaux.

A titre d'exemple, la partie centrale 32 du clapet 31 et l'armature 51 peuvent être réalisée en alliage léger ou en une matière plastique rigide ou semi-rigide et la partie annulaire 33 en matériau souple peut être constituée par un élastomère vulcanisé ou non ou par un élastomère thermoplastique.

Selon un autre exemple, la partie centrale 32 du clapet 31 peut être réalisée en une matière plastique rigide ou- semi-rigide ou un élastomère thermoplastique semi-rigide, la partie annulaire 33 peut être réalisée en un élastomère thermoplastique ou un élastomère vulcanisé ou non et l'armature 51 peut être réalisée en une matière plastique rigide ou semi-rigide.

L'ensemble armature-clapet 30 peut être formé en une opération par le procédé d'injection multimatières.

L'ensemble armature-clapet selon l'invention présente l'avantage d'intégrer dans une même pièce les deux fonctions obtenues par le clapet et l'armature.

De plus, le phénomène de "bruit de clapet" est éliminé grâce au travail en traction-compression de la partie annulaire en matériau souple du clapet.

La réalisation de l'ensemble armature-clapet selon l'invention par le procédé d'injection multimatières présente les avantages d'être d'un coût réduit du fait de la diminution du temps de cycle, d'un coût de la matière faible et d'une réduction des opérations de manutention.

De plus, selon le type de matières composant les éléments de cet ensemble, un gain de masse plus ou moins important est obtenu.

## Revendications

1. Ensemble armature-clapet de support hydroélastique destiné à être interposé entre un élément à suspendre et un élément à isoler l'un par rapport à l'autre, notamment pour la suspension d'un groupe motopropulseur dans une caisse d'un véhicule automobile, du type comprenant un corps (10) formé par une masse en matériau élastomère (11) reliant une armature supérieure (12) et une armature inférieure (13), une chambre de travail (25) délimitée au moins en partie par la masse en matériau élastomère (11) et une chambre d'expansion (26) délimitée au moins en partie par une membrane souple (27), ces deux chambres (25, 26) étant remplies de liquide et reliées entre elles par un canal de communication (55), et du type dans lequel les chambres de travail (25) et d'expansion (26) sont séparées l'une de l'autre par l'ensemble armature-clapet (30) monté sur un support (28) relié à l'armature inférieure (13), l'ensemble armature-clapet (30) étant formé en une seule pièce et le clapet (31) comprenant une partie centrale (32) en forme de disque réalisée en une matière rigide et une partie annulaire (33)en forme de couronne concentrique audit disque réalisée en une matière souple reliant élastiquement ladite partie centrale (32) à l'armature (51) réalisée en une matière rigide et comportant, à sa périphérie, le canal de communication (55) entre les deux chambres (25, 26),l'armature (51) ayant la forme d'un anneau comportant, d'une part, une portion externe formée de deux branches parallèles (52, 53) et reliées entre elles par une branche centrale (54) pour délimiter le canal de communication (55) et, d'autre part, une portion interne (56) plane s'étendant perpendiculairement à la branche centrale (54) vers le centre de l'anneau et destinée à être reliée à la partie annulaire (33) du clapet (31) et la partie centrale (32) du clapet (31) comportant des organes (34, 35) de limitation en amplitude à basse fréquence dudit clapet, **caractérisé en ce que** les organes de limitation en amplitude sont formés par deux pattes supérieures (34) diamétralement opposées, solidaires de la partie centrale (32) du clapet (31) et s'étendant radialement au-dessus de la partie annulaire (33) et par deux pattes inférieures (35) diamétralement opposées, solidaires de la partie centrale (32) du clapet (31) et s'étendant radialement au-dessous de ladite partie annulaire (33), lesdites pattes supérieures et inférieures (34, 35) étant décalées de 90° les unes par rapport aux autres de manière à ce que la partie annulaire (33) soit interposée entre ladite portion interne (56) de l'armature (51) et lesdites pattes supérieures (34) pour limiter le déplacement axial de la partie centrale (32) par rapport à l'armature (51) dans une direction et en même temps la partie annulaire (33) soit interposée entre ladite portion interne (56) de l'armature (51) et lesdites pattes inférieures (35) pour limiter le déplacement axial de la partie centrale (32) par rapport à l'armature (51) dans une direction opposée.

2. Ensemble armature-clapet selon la revendication 1, **caractérisé en ce que** la partie annulaire (33) du clapet (31) est reliée à la partie centrale (32) dudit clapet et à la portion interne (56) plane de l'armature (51) par collage, par soudure ou par une liaison chimique.

3. Support hydroélastique destiné à être interposé entre un élément à suspendre et un élément à isoler l'un par rapport à l'autre, notamment pour la suspension d'un groupe motopropulseur dans une caisse d'un véhicule automobile, **caractérisé en ce qu'**il comporte un ensemble armature-clapet (30) selon la revendication 1 ou 2.

## Claims

1. Combined partition-valve unit for a hydroelastic support to be interposed between an element to be suspended and an element to be insulated one in relation to the other, in particular for the suspension of a engine assembly in a body of a motor vehicle, of the type comprising a body (10) formed by a mass of elastomer material (11) connecting an upper partition (12) and a lower partition (13), a work chamber (25) defined at least partially by the mass of elastomer material (11) and an expansion chamber (26) defined at least partially by a flexible membrane (27), these two chambers (25, 26) being filled with liquid and connected to one another by a connection duct (55), and of the type in which the work (25) and expansion (26) chambers are separated from one another by the partition-valve unit (30) mounted on a support (28) connected to the lower partition (13), said partition-valve unit (30) being formed in a single piece and the valve (31) comprising a central part (32) in the form of a disc made of a rigid material and an annular part (33) in the form of a ring concentric to said disc and made of a flexible material elastically connecting said central part (32) to the partition (51) made of rigid material and having on its periphery the connection duct (55) between the two chambers (25, 26), the partition (51) having the form of a ring comprising an external portion formed from two parallel branches (52, 53) connected to one another by a central branch (54) to define the connection duct (55), and also a plane internal portion (56) extending perpendicularly to the central branch (54) towards the centre of the ring to be connected to the annular part (33) of the valve (31), and the central part (32) of the valve (31) comprising elements (34, 35) to limit the amplitude of said valve to low frequency, **characterised in that** the elements for limiting the amplitude are formed by two upper diametrically opposed lugs (34) integral to the central part (32) of the valve (31) and extending radially above the annular part (33), and by two lower diametrically opposed lugs (35) integral to the central part (32) of the valve (31) and extending radially below said annular part (33), said upper and lower lugs (34, 35) being shifted 90° in relation to one another such that the annular part (33) is interposed between said internal portion (56) of the partition (51) and said upper lugs (34) to restrict the axial displacement of the central part (32) in relation to the partition (51) in one direction, and at the same time the annular part (33) is interposed between said internal portion (56) of the partition (51) and said lower lugs (35) to restrict the axial displacement of the central part (32) in relation to the partition (51) in an opposite direction.

2. Combined partition-valve unit according to Claim 1, **characterised in that** the annular part (33) of the valve (31) is connected to the central part (32) of said valve and to the plane internal portion (56) of the partition (51) by adhesion, welding or by a chemical bond.

3. Hydroelastic support to be interposed between an element to be suspended and an element to be insulated one in relation to the other, in particular for the suspension of an engine assembly in a body of a motor vehicle, **characterised in that** it comprises a combined partition-valve unit (30) according to Claim 1 or 2.

## Patentansprüche

1. Ventilarmierungsanordnung für ein hydroelastisches Lager, das dafür bestimmt ist, zwischen einem aufzuhängenden Element und einem voneinander zu isolierenden Element angeordnet zu werden, insbesondere für die Aufhängung eines Antriebssystems in einem Kraftfahrzeuggehäuse, der Art mit einem Körper (10), der von einer Masse aus Elastomermaterial (11) gebildet ist, die eine obere Armierung (12) und eine untere Armierung (13) verbindet, und mit einer Arbeitskammer (25), die zumindest zum Teil von der Masse aus Elastomermaterial (11) begrenzt ist und einer Ausdehnungskammer (26), die zumindest zum Teil von einer biegsamen Membran (27) begrenzt ist, wobei diese beiden Kammern (25, 26) mit Flüssigkeit gefüllt und miteinander über einen Verbindungskanal (55) verbunden sind, und der Art, bei welcher die Arbeitskammer (25) und die Ausdehnungskammer (26) durch die Ventilarmierungsanordnung (30) voneinander getrennt sind, die auf einem mit der unteren Armierung (13) verbundenen Träger (28) angeordnet ist, wobei die Ventilarmierungsanordnung (30) aus einem einzigen Stück gebildet ist und das Ventil (31) einen scheibenförmigen Mittelbereich (32) aufweist, der aus einem steifen Material besteht, und einen Ringbereich (33) in Form einer konzentrischen Krone für die Scheibe, der aus einem weichen Material besteht, und der den Mittelbereich (32) elastisch mit der Armierung (51) verbindet, die aus einem steifen Material besteht, und die auf ihrem Umfang den Verbindungskanal (55) zwischen den beiden Kammern (25, 26) aufweist, wobei die Armierung (51) die Form eines Ringes hat, der einerseits einen Außenbereich aufweist, der aus zwei parallelen Armen (52, 53) gebildet ist, die miteinander durch einen zentralen Arm (54) verbunden sind, um den Verbindungskanal (55) auszubilden, und andererseits einen ebenen Innenbereich (56), der sich senkrecht zu dem zentralen Arm (54) zu dem Mittelpunkt des Ringes hin erstreckt, und der dafür bestimmt ist, mit dem ringförmigen Bereich (33) des Ventils (31) verbunden zu werden, und wobei der Mittelbereich (32) des Ventils (31) Begrenzungsorgane (34, 35) für die Niedrigfrequenzausdehnung des Ventils aufweist, **dadurch gekennzeichnet, dass** die Ausdehnungsbegrenzungsorgane von zwei diametral einander gegenüberliegenden, oberen Klemmen (34) gebildet sind, die einstückig mit dem Mittelbereich (32) des Ventils (31) ausgebildet sind, und die sich radial oberhalb des Ringbereiches (33) erstrecken, und von zwei diametral einander gegenüberliegenden, unteren Klemmen (35), die einstückig mit dem Mittelbereich (32) des Ventils (31) ausgebildet sind, und die sich radial unterhalb des Ringbereiches (33) erstrecken, wobei die oberen und unteren Klemmen (34, 35) um 90° zueinander derart versetzt angeordnet sind, dass der Ringbereich (33) zwischen dem Innenbereich (56) der Armierung (51) und den oberen Klemmen (34) angeordnet ist, um die axiale Bewegung des Mittelbereiches (32) bezüglich der Armierung (51) in einer Richtung zu begrenzen, und derart, dass zugleich der Ringbereich (33) zwischen dem Innenbereich (56) der Armierung (51) und den unteren Klemmen (35) angeordnet ist, um die axiale Bewegung des Mittelbereiches (32) bezüglich der Armierung (51) in einer entgegen gesetzten Richtung zu begrenzen.

2. Ventilarmierungsanordnung gemäß Anspruch 1, **dadurch gekennzeichnet, dass** der Ringbereich (33) des Ventils (31) mit dem Mittelbereich (32) des Ventils und dem ebenen Innenbereich (56) der Armierung (51) durch Verkleben, Verschweißen oder eine chemische Bindung verbunden ist.

3. Hydroelastisches Lager, das dafür bestimmt ist, zwischen einem aufzuhängenden Element und einem voneinander zu isolierenden Element angeordnet zu werden, insbesondere für die Aufhängung eines Antriebssystems in einem Kraftfahrzeuggehäuse, **dadurch gekennzeichnet, dass** es eine Ventilarmierungsanordnung (30) gemäß Anspruch 1 oder 2 aufweist.
